# EUROPÄISCHE PATENTANMELDUNG

(11) **EP 3 800 346 A1**
(43) Veröffentlichungstag der Anmeldung: **07.04.2021**
(21) Anmeldenummer: 19200788.8
(22) Anmeldetag: 01.10.2019
(51) Int. Cl.: F03D 9/00, H02S 10/12

(54) **PHOTOVOLTAIKANLAGE FÜR WINDENERGIEANLAGEN ALS STROMERZEUGUNGSSYSTEM ALS AUCH AUTARK OHNE WINDENERGIEANLAGE SOWIE VERFAHREN ZU DEREN BETRIEB**

(71) Anmelder: Licht, Thomas, 33102 Paderborn (DE)
(72) Erfinder: Licht, Thomas, 33102 Paderborn (DE)
(74) Vertreter: Schober, Mirko

(57) **Zusammenfassung**

Eine Photovoltaikanlage (3) für eine zur Gewinnung von Windstrom ausgebildete und einen Turm (4) aufweisende Windkraftanlage (2), umfasst eine zur Gewinnung von Solarstrom ausgebildete Solarmodulanordnung (5), gekennzeichnet durch eine Ausgestaltung der Solarmodulanordnung (5) derart, dass der Turm (4) zumindest bereichsweise mit wenigstens einem Teil der Solarmodulanordnung (5) umgreifbar oder/und umfahrbar ist.

## Beschreibung

Die Erfindung betrifft eine Photovoltaikanlage für eine zur Gewinnung von Windstrom ausgebildete und einen Turm aufweisende Windkraftanlage gemäß dem Oberbegriff von Anspruch 1 sowie ein Stromerzeugungssystem mit einer Windkraftanlage und einer solchen Photovoltaikanlage mit den Merkmalen von Anspruch 9. Weiterhin betrifft die Erfindung ein Verfahren zum Betrieb einer solchen Photovoltaikanlage oder eines solchen Stromerzeugungssystems mit den Merkmalen von Anspruch 11.

Bereits heute beruht die Energieerzeugung vielerorts auf der Nutzung konventioneller und regenerativer Energiequellen. Im Rahmen der als Energiewende bezeichneten Abkehr von fossilen Energieträgern nimmt insbesondere die Gewinnung elektrischer Energie aus Wind einen immer höheren Stellenwert ein. Hierfür eingesetzte Windkraftanlagen erlauben die Aufstellung an Land oder vor den Küsten (Offshore). Der Turm einer Windkraftanlage benötigt dabei eine verhältnismäßig kleine Aufstellfläche im Vergleich zur Größe ihres Rotors. Ebenfalls zur direkten Stromgewinnung eingesetzte Photovoltaikanlagen werden bisweilen meist vereinzelt auf Gebäuden installiert. Da die sonstige in der Regel bodennahe Aufstellung deren Solarmodulanordnung zu einer Versiegelung zusätzlicher Flächen führt, stehen diese Flächen keiner weiteren Nutzung mehr zur Verfügung. Mitunter werden Windkraftanlagen und Photovoltaikanlagen auch miteinander auf einem Areal genutzt, indem sie separat beieinander aufgestellt werden. Auf diese Weise ist eine gemeinsame Stromgewinnung aus Wind und Sonne realisierbar.

Neben der Suche nach geeigneten Speichern zum Akkumulieren und bedarfsweisen Einspeisen überschüssig gewonnener Energie stellen insbesondere die Schwankungen in Intensität und Verfügbarkeit von Sonne sowie Wind eine große Herausforderung dar.

Der vorliegenden Erfindung liegt daher die Aufgabenstellung zugrunde, eine Photovoltaikanlage sowie ein Stromerzeugungssystem aus einer, insbesondere bereits bestehenden, Windkraftanlage und einer Photovoltaikanlage weiterzuentwickeln, um diese besser miteinander kombinieren zu können. Weiterhin soll ein Verfahren zu deren Betrieb geschaffen werden, welches eine effektive und zugleich sichere Einsetzbarkeit sowie Zusammenarbeit von Photovoltaikanlage und Windkraftanlage ermöglicht.

Die Lösung des gegenständlichen Teils dieser Aufgabe besteht nach der Erfindung in einer Photovoltaikanlage mit den Merkmalen von Anspruch 1. Weiterhin wird diese Aufgabe durch ein Stromerzeugungssystem mit den Merkmalen von Anspruch 9 gelöst. Die Lösung des verfahrensmäßigen Teils dieser Aufgabe erfolgt mit den Maßnahmen gemäß Anspruch 11. Jeweils vorteilhafte Ausgestaltungen sind Gegenstand der abhängigen Unteransprüche 2 bis 8 sowie 10 und 12 bis 17. Es wird nun eine Ausgestaltung der Solarmodulanordnung vorgeschlagen, durch die der Turm der Windkraftanlage zumindest bereichsweise mit wenigstens einem Teil der Solarmodulanordnung umgreifbar ist. Alternativ oder ergänzend hierzu kann die Solarmodulanordnung auch so ausgestaltet sein, dass mit wenigstens einem Teil der Solarmodulanordnung der Turm der Windkraftanlage zumindest bereichsweise umfahrbar ist.

In beiden Fällen liegt der Kern der Erfindung darin, dass die Solarmodulanordnung eine möglichst platzsparende und effektive Kombination der Photovoltaikanlage mit einer, insbesondere bestehenden, Windkraftanlage erlaubt, indem diese quasi unmittelbar um den Turm der Windkraftanlage herum anordenbar oder/und verfahrbar ist. Gegenüber der Anordnung nebeneinander wird so eine überaus kompakte Zusammenlegung beider Konzepte zur Energiegewinnung erreicht.

Die Solarmodulanordnung kann eine Größenordnung von beispielsweise 60m x 40m aufweisen. Alternativ denkbare Abmessungen können bei beispielsweise bei 90m x 60m oder gar 120m x 80m liegen. Zwischenwerte zu diesen Abmessungen in Breite x Höhe sind ebenfalls denkbar.

Nach einer besonders bevorzugten Weiterentwicklung des grundsätzlichen Erfindungsgedankens kann wenigstens ein Teil der Solarmodulanordnung zumindest bereichsweise an die äußere Kontur des Turms formangepasst sein. Mit anderen Worten schmiegt sich hierbei wenigstens ein Teil der Solarmodulanordnung an die Form des Turms an, um möglichst viel Fläche um den Turm herum mit der Solarmodulanordnung auszustatten. Aufgrund der hierdurch realisierbaren Abmessungen steht so eine entsprechend große Fläche zur nutzbaren Beaufschlagung mit Sonnenlicht zu Verfügung.

Unter Anschmiegen wird im Sinne der Erfindung entweder ein wenigstens bereichsweises Anlegen zumindest von Teilen der Solarmodulanordnung an den Turm oder eine demgegenüber formangepasste Beabstandung ohne etwaigen Kontakt verstanden. Mit anderen Worten kann hierdurch wenigstens ein Teil der Solarmodulanordnung formangepasst, beispielsweise flächig, am Turm angeordnet oder unter Einhaltung eines Abstands an dessen äußere Form angepasst sein. Folglich kann auf diese Weise beispielsweise zumindest ein Teil der Solarmodulanordnung im Sinne von Kacheln entweder direkt oder unter Eingliederung einer Unterkonstruktion am Turm der Windkraftanlage befestigt sein. Denkbar wäre auch eine bewegliche Ausgestaltung der Unterkonstruktion, um die von ihr getragenen Teile der Solarmodulanordnung bei Bedarf relativ zum Turm verlagern zu können, beispielsweise in dessen Umfangsrichtung rotierbar oder/und in dessen Längsrichtung verfahrbar und/oder verlagerbar. Das zuvor Gesagte gilt sowohl für eine beispielsweise parallele oder demgegenüber geneigte Erstreckung wenigstens eines Teils der Solarmodulanordnung zur Außenfläche des Turms. In allen Fällen lässt sich der unmittelbar um den Turm der Windkraftanlage zur Verfügung stehende Bereich optimal zur Gewinnung von Solarstrom nutzen.

Nach der Erfindung kann wenigstens ein Teil der Solarmodulanordnung einen Ausschnitt aufweisen, innerhalb dessen der Turm zumindest bereichsweise anordenbar ist. Der Ausschnitt kann sich dabei bevorzugt bis zu einem Randbereich der Solarmodulanordnung erstrecken, so dass dieser zumindest theoretisch eine relative Verlagerung der Solarmodulanordnung relativ zum Turm erlaubt, bei welcher die beispielsweise horizontal ausgerichtete Solarmodulanordnung in Richtung seiner Erstreckung unter Freigabe des sonst zumindest bereichsweise im Ausschnitt befindlichen Turms entfernbar, das bedeutet insbesondere auf Distanz verlagerbar, und anschließend wieder heranfahrbar ist. Die so gewonnene Bewegungsfreiheit erlaubt beispielsweise eine Neigung des den Ausschnitt beinhaltenden Teils der Solarmodulanordnung relativ zum Turm. Abhängig von der Neigung zumindest des den Ausschnitt aufweisenden Teils der Solarmodulanordnung erstreckt sich der Turm dabei entweder weit innerhalb des Ausschnitts oder aber nahe dem offenen Ende des Ausschnitts. Bei einer Ausrichtung parallel zur Oberfläche des Turms könnte dieser sogar vollständig aus dem Ausschnitt heraus freigegeben sein.

Grundsätzlich kann die Solarmodulanordnung so ausgestaltet sein, dass diese zumindest teilweise am Turm festlegbar ist. Alternativ oder ergänzend hierzu kann diese zumindest teilweise neben dem Turm abstützbar sein. Dies meint beispielsweise eine Abstützung auf einem Fundament des Turms oder wenigstens einem zusätzlichen Fundament, welches hierfür beispielsweise nur bereichsweise oder in Ringform um den Turm oder dessen Fundament herum angeordnet sein kann. Es kann zumindest ein Teil der Solarmodulanordnung auch in Umfangsrichtung des Turms rotierbar oder/und in Längsrichtung des Turms verfahrbar und/oder verlagerbar sein, während dieser Teil sich am Turm selbst oder/und um diesen herum abstützt.

Weiterhin sieht die Erfindung eine mögliche Ausgestaltung wenigstens eines Teils der Solarmodulanordnung vor, aufgrund der zumindest jener Teil der Solarmodulanordnung gegenüber einer Hochrichtung neigbar sein kann. Je nach konkreter Umsetzung kann die Neigbarkeit beispielsweise relativ zu einer Unterkonstruktion erfolgen.

Die Solarmodulanordnung der erfindungsgemäßen Photovoltaikanlage kann in besonders bevorzugter Weise einzelne Solarmodule besitzen. Die Solarmodule sind dabei so ausgebildet beziehungsweise angeordnet, dass wenigstens einige von diesen relativ zueinander verlagerbar sind. Die Verlagerbarkeit schließt deren Neigbarkeit zueinander und insbesondere deren parallele Verschieblichkeit untereinander mit ein. In letzterem Fall sind die Solarmodule in vorteilhafter Weise beispielsweise mit ihren Deckseiten zumindest bereichsweise übereinander anordenbar, was eine überaus kompakte Verkleinerung zumindest einzelner Bereich der Solarmodulanordnung erlaubt.

Die Photovoltaikanlage kann nach einer bevorzugten Weiterbildung der Erfindung eine Unterkonstruktion aufweisen, durch welche zumindest ein Teil der Solarmodulanordnung in einem, insbesondere zwischen einem Rotor der Windkraftanlage und einem Untergrund gelegenen, Höhenbereich relativ zum Turm anordenbar ist. Eine solche Unterkonstruktion erlaubt eine entsprechende Höhenlage wenigstens eines Teils der Solarmodulanordnung oberhalb eines den Turm umgebenden Untergrunds. Hierdurch kann beispielsweise ein unterhalb der so entsprechend hoch gelegenen Solarmodulanordnung befindlicher Pflanzenbereich oder/und Erdbereich zugänglich bleiben, was insbesondere dessen weitere Nutzung wie etwa eine landwirtschaftliche Bewirtschaftung oder durch Tierzucht erlaubt.

Sofern die Solarmodulanordnung einzelne Solarmodule besitzt, können gemäß einer vorteilhaften Ausgestaltung wenigstens einige dieser Solarmodule U-förmig zueinander angeordnet oder anordenbar sein. Besonders bevorzugt können einige dieser Solarmodule einzeln und/oder als eine Einheit verlagerbar, insbesondere schwenkbar oder/und drehbar, sein.

Die nunmehr vorgestellte erfindungsgemäße Photovoltaikanlage ermöglicht die wesentlich verbesserte Kombinationsmöglichkeit mit einer, insbesondere bereits bestehenden, Windkraftanlage.

Hierbei stellt sie eine symbiotische Technologie zur additiven beziehungsweise symbiotischen Nutzung regenerativer Energiequellen zur Verfügung. Zudem stehen bereits flächendeckend vorhandene Windkraftanlagen in Gesamt-Europa zur Verfügung, um mit der erfindungsgemäßen Photovoltaikanlage kombiniert zu werden. Demgegenüber stehen konventionelle Photovoltaikanlagen meist autark und separat an völlig anderen Standorten. Durch die Kombination mit bereits bestehenden Windkraftanlagen können deren am jeweiligen Standort bereits vorhandenen Anschlüsse nebst der damit verbundenen Technologien direkt zur Einspeisung des erzeugten Solarstroms genutzt werden. Die bereits vorhandene Infrastruktur zur Verteilung des Stroms ist somit auch direkt nutzbar und muss nicht erst aufwändig installiert werden. Aufgrund der erfindungsgemäßen Anordnung zumindest von Teilen ihrer Solarmodulanordnung unmittelbar an oder im Bereich des Turms ist eine vorteilhafte Stromgewinnung aus Wind und Sonne in möglichst kompakter Form realisierbar. Erfahrungsgemäß ist die Windkraft immer dann am größten, wenn das Druckgefälle beziehungsweise die Gradient-Kraft am größten ist. Der Wind weht hierbei immer vom Hochdruckgebiet hin zum Gebiet mit demgegenüber niedrigerem Druck (Tiefdruckgebiet). Es weht in Zentren ausgedehnter Hochdruckgebiete annähernd kein Wind, während gleichzeitig die Sonne langfristig scheint, und so kann trotz ausbleibender Windkraft in hohem Maße Solarstrom gewonnen werden. Die Erfindung ermöglicht hierbei die überaus vorteilhafte Kombination zur nahezu durchgehenden Energiegewinnung trotz schwankender Grundlage für den jeweiligen Energiegewinnungsprozess auf kleinstem Raum. Konventionelle Photovoltaikanlagen der hier in Rede stehenden Größe sind zudem zumeist statisch oder nur begrenzt beweglich angeordnet, so dass eine optimale Ausrichtung hin zur Sonne nur bedingt oder gar nicht möglich ist. Die erfindungsgemäße Verlagerbarkeit wenigstens eines Teils der Solarmodulanordnung erlaubt eine stets optimale Ausrichtung hin zur Sonne, was ein Höchstmaß an Wirkungsgrad in Bezug auf die Solarstromgewinnung erlaubt. Verlagerbarkeit kann sowohl eine translatorische Verlagerung als auch eine Schwenk- oder Drehbewegung beinhalten. Aufgrund der möglichen da vorteilhaften Formanpassung wenigstens eines Teils der Solarmodulanordnung an den Turm einer damit zu kombinierenden Windkraftanlage wird eine bestmögliche Flächennutzung erreicht. Durch die ebenfalls mögliche Anordnung der Solarmodulanordnung über dem Untergrund bleibt dieser auch weiterhin begehbar, wodurch sich der sonst zur Versiegelung beitragende Anteil einer im Gelände aufgestellten Photovoltaikanlage auf ein Minimum reduziert oder aber vollständig entfällt. Durch die erfindungsgemäße Kombinierbarkeit ist beispielsweise der Turm einer Windkraftanlage selbst dahingehend nutzbar, die Photovoltaikanlagen in einer ausreichend hohen Lage über Grund anzuordnen, während diese ansonsten nur knapp oberhalb eines Untergrunds gelegen sind.

Weiterhin ist die Erfindung auf ein Stromerzeugungssystem gerichtet, welches eine Windkraftanlage und eine wie zuvor bereits beschriebene erfindungsgemäße Photovoltaikanlage umfasst. Bei der Windkraftanlage kann es sich entweder um eine bereits bestehende Windkraftanlage oder eine im Rahmen der Anordnung der Photovoltaikanlage aufzustellende Windkraftanlage handeln. Die sich hieraus ergebenden Vorteile wurden bereits im Zusammenhang mit der zuvor vorgestellten erfindungsgemäßen Photovoltaikanlage näher erläutert, so dass zur Vermeidung von Wiederholungen an dieser Stelle auf die entsprechenden Ausführungen hierzu verwiesen wird.

Nach einer bevorzugten Weiterbildung des erfindungsgemäßen Stromerzeugungssystems können wenigstens einige Solarmodule an einem Rotor der Windkraftanlage angeordnet sein. Alternativ hierzu kann der Rotor selbst zumindest teilweise als mindestens ein Solarmodul ausgebildet sein. Hierdurch kann zumindest ein Teil des Rotors in besonders vorteilhafter Weise zur gleichzeitigen oder abwechselnden Stromgewinnung aus zwei unterschiedlichen regenerativen Energiequellen beitragen, nämlich aus Wind und Sonne.

Auch ist die Erfindung auf ein Verfahren gerichtet, welches dem Betrieb einer eingangs beschriebenen erfindungsgemäßen Photovoltaikanlage oder eines wie zuvor beschriebenen erfindungsgemäßen Stromerzeugungssystems dient. Hierbei wird auf Basis von Wetterdaten zumindest ein Teil der Solarmodulanordnung der in Bezug auf ihre Ausrichtung oder/und die Anordnung zumindest einiger Solarmodule der Solarmodulanordnung der Photovoltaikanlage relativ zueinander angesteuert. Die hierbei jeweils zugrundeliegenden Wetterdaten können beispielsweise vor Ort erfasst werden. Denkbar ist hierbei auch die alternative oder gleichzeitige Nutzung einer weiteren Datenquelle, wie etwa über ein Netzwerksystem wie beispielsweise das Internet. Die Verbindung zu der Datenquelle kann dabei kabelgebunden oder/und kabellos erfolgen.

Nach einer bevorzugten Weiterentwicklung des erfindungsgemäßen Verfahrens kann wenigstens einer der nachfolgend aufgeführten Auslöser in Bezug auf Wetterdaten beziehungsweise das Wetter als solches genutzt werden, um die Solarmodulanordnung der Photovoltaikanlage in jeweils geeigneter Weise zu manipulieren:
Auf Basis einer aktuellen oder zu erwartenden Windstärke kann zumindest ein Teil der Solarmodulanordnung in der Neigung verändert werden. Alternativ oder ergänzend hierzu können wenigstens einige Solarmodule der Solarmodulanordnung relativ zueinander verlagert werden. Durch die beschriebenen Maßnahmen kann insbesondere die Windeinzugsfläche bzw. Winddruckfläche in vorteilhafter Weise reduziert werden, um beispielsweise etwaigen Schäden durch Überbelastung vorzubeugen.

Auf Basis eines aktuellen oder zu erwartenden Schneeaufkommens kann zumindest ein Teil der Solarmodulanordnung in der Neigung verändert werden. Alternativ oder ergänzend hierzu können wenigstens einige Solarmodule der Solarmodulanordnung relativ zueinander verlagert werden. Durch die beschriebenen Maßnahmen kann insbesondere die Schneeauflagefläche oder/und das Anhaften des Schnees, und damit insbesondere die Schneelast, in vorteilhafter Weise reduziert werden, um beispielsweise etwaigen Schäden durch Überbelastung vorzubeugen.

Auf Basis einer aktuellen oder zu erwartenden Regenstärke kann zumindest ein Teil der Solarmodulanordnung in der Neigung verändert werden. Alternativ oder ergänzend hierzu können wenigstens einige Solarmodule der Solarmodulanordnung relativ zueinander verlagert werden. Durch die beschriebenen Maßnahmen kann insbesondere der Abschirmeffekt gegenüber Regen für einen hiervon betroffenen Pflanzenbereich oder/und Erdbereich unterhalb der Solarmodulanordnung reduziert werden.

Auf Basis eines aktuellen oder zu erwartenden Standes der, insbesondere tiefstehenden oder abwesenden, Sonne kann zumindest ein Teil der Solarmodulanordnung in der Neigung verändert werden. Alternativ oder ergänzend hierzu können wenigstens einige Solarmodule der Solarmodulanordnung relativ zueinander verlagert werden. Durch die beschriebenen Maßnahmen kann insbesondere der Abschirmeffekt gegenüber Tau für einen hiervon betroffenen Pflanzenbereich oder/und Erdbereich unterhalb der Solarmodulanordnung reduziert werden. Die Maßnahme ist insbesondere in jenen Zeiten relevant, in denen es typischerweise zur Taubildung kommt, wie beispielsweise in den Abend- oder/und Morgenstunden und/oder in der Nacht.

Auf Basis einer aktuellen oder zu erwartenden Eislast kann zumindest ein Teil der Solarmodulanordnung in der Neigung verändert werden. Alternativ oder ergänzend hierzu können wenigstens einige Solarmodule der Solarmodulanordnung relativ zueinander verlagert werden. Durch die beschriebenen Maßnahmen kann insbesondere die Eisauflagefläche in vorteilhafter Weise reduziert werden, um beispielsweise etwaigen Schäden durch das Eisgewicht und durch möglicherweise von der Windenergieanlage herabfallende Eisstücke vorzubeugen. Alternativ oder ergänzend hierzu kann wenigstens eines der Solarmodule von der Windkraftanlage abgewendet werden, um so zumindest dessen empfindlichen Bereich vor dem möglichen Auftreffen herabfallender Eisstücke zu schützen.

Im Zusammenhang mit einer der zuvor genannten Maßnahmen, die Regenstärke betreffend, können aufgrund dieser zumindest einige Teile der Solarmodulanordnung oder/und wenigstens einige Solarmodule als Einheit um den Turm der Windkraftanlage herum rotiert werden. Dies kann alternativ oder zusätzlich zu der gennannten Maßnahme aufgrund des in Rede stehenden Auslösers erfolgen. Bevorzugt kann die Solarmodulanordnung dabei wenigstens eine Lücke aufweisen, durch welche hindurch zumindest ein Teil des Regens fällt. Hierdurch kann beispielsweise eine wandernde Rotation erzielt werden, um die ansonsten abgeschirmten Bereiche nacheinander mit Regenwasser zu versorgen.

Im Zusammenhang mit einer der zuvor genannten Maßnahmen, die Eislast betreffend, kann aufgrund der zumindest potenziellen Bildung von Eis der Rotor der Windkraftanlage zumindest bereichsweise beheizt werden. Dies kann alternativ oder zusätzlich zu der genannten Maßnahme aufgrund des in Rede stehenden Auslösers erfolgen. Durch die gezielte Temperierung des Rotors kann eine mögliche Eisbildung bereits im Vorfeld reduziert oder gar wirksam verhindert werden.

Im Zusammenhang mit einer der zuvor genannten Maßnahmen, die Eislast betreffend, kann aufgrund der zumindest potenziellen Bildung von Eis der Rotor der Windkraftanlage, vorzugsweise bis zu dessen Stillstand, abgebremst werden. Dies kann alternativ oder zusätzlich zu der genannten Maßnahme aufgrund des in Rede stehenden Auslösers erfolgen. Durch das gezielte Abbremsen des Rotors kann die Gefahr eines Ablösens bereits gebildeter Eisstücke reduziert oder gar wirksam verhindert werden, indem die hierfür verantwortlichen Fliehkräfte des Rotors reduziert oder gar vollständig verhindert werden.

Nach einer bevorzugten Weiterbildung des erfindungsgemäßen Verfahrens kann auf Basis eines aktuellen oder zu erwartenden Sonnenstands die Solarmodulanordnung zumindest teilweise zur Erzielung einer optimalen Gewinnung von Solarstrom ausgerichtet werden. Die Ausrichtung kann dabei in vorteilhafter Weise unter Vermeidung eines Schattenwurfs, beispielsweise durch die Windkraftanlage, auf die Solarmodulanordnung erfolgen. Dabei können beispielsweise zumindest einzelne oder zu einer Einheit zusammengefasste Solarmodule stets optimal zur Sonne hin ausgerichtet werden, um einen möglichst hohen Wirkungsgrad in Bezug auf die Stromgewinnung zu erzielen. Die Ausrichtung kann beispielsweise die Neigung gegenüber einer horizontalen Ebene oder/und einer vertikalen Ebene beinhalten. Alternativ oder ergänzend hierzu kann die Ausrichtung eine Rotation um den Turm der Windkraft beinhalten.

Grundsätzlich sieht das erfindungsgemäße Verfahren vor, dass die Solarmodulanordnung bei Bedarf, insbesondere zu Wartungs- oder Reparaturzwecken oder/und auf Basis einer aktuellen oder zu erwartenden Windstärke, manipuliert werden kann. Eine hierfür geeignete Manipulationsmöglichkeit kann wenigstens eine der nachfolgend genannten Maßnahmen sein:
Wenigstens ein Teil oder/und mindestens ein Solarmodul der Solarmodulanlage kann in Bezug auf eine Höhe relativ zum Untergrund in seiner Lage verändert werden. Dies schließt dessen grundsätzliche Verlagerbarkeit oder/und Neigbarkeit oder/und Rotation um den Turm der Windkraftanlage mit ein.

Wenigstens ein Teil oder/und einzelne Solarmodule der Solarmodulanlage können relativ zueinander in ihrer Lage verändert werden. Dies schließt dessen/deren grundsätzliche Verlagerbarkeit oder/und Neigbarkeit oder/und Rotation um den Turm der Windkraftanlage mit ein.

Die im Rahmen der Erfindung vorgestellte symbiotische Nutzung von Windkraft und Sonnenenergie bietet insgesamt eine Lösung zur Minimierung von Stromschwankungen bei einer zunehmenden Ausrichtung weg von fossilen Energieträgern hin zur Nutzung regenerativer Energiequellen.

Wenigstens ein Teil oder/und einzelne Solarmodule der Solarmodulanlage können in Bezug auf den Rotor der Windkraftanlage rotiert werden. Die Rotation kann hierbei beispielsweise ein zumindest bereichsweises Abwenden oder/und Zuwenden zum Rotor beinhalten. Für die Rotation können einzelne Solarmodule als Einheit zusammengefasst sein, so dass diese gemeinsam manipuliert werden. Das Vorgenannte schließt dessen/deren grundsätzliche Verlagerbarkeit oder/und Neigbarkeit oder/und Rotation um den Turm der Windkraftanlage mit ein.

Weitere Ausgestaltungen der vorliegenden Erfindung sind aus den schematisch dargestellten Ausführungsbeispielen erkennbar. Es zeigen:
- Fig. 1: einen Ausschnitt einer ersten Variante eines erfindungsgemäßen Stromerzeugungssystems in einer perspektivischen Darstellungsweise,
- Fig. 2: das Stromerzeugungssystem aus Fig. 1 mit einer lageveränderten Solarmodulanordnung in einer zweiten Variante in ansonsten unveränderter Darstellungsweise,
- Fig. 3: eine Gründung des Stromerzeugungssystems aus Fig. 1 und Fig. 2 in einer Aufsicht,
- Fig. 4: das Stromerzeugungssystem aus Fig. 1 und Fig. 2 in einer Aufsicht,
- Fig. 5: das Stromerzeugungssystem aus Fig. 4 mit einer teilweisen Lageveränderung der Solarmodulanordnung in ansonsten unveränderter Darstellungsweise,
- Fig. 6: das Stromerzeugungssystem aus Fig. 5 mit einer demgegenüber weiteren teilweisen Lageveränderung der Solarmodulanordnung in gleicher Darstellungsweise,
- Fig. 7: das Stromerzeugungssystem aus Fig. 6 mit einer demgegenüber nochmals weiteren teilweisen Lageveränderung der Solarmodulanordnung in gleicher Darstellungsweise sowie
- Fig. 8: das Stromerzeugungssystem aus den vorherigen Fig. 1 bis Fig. 7 in einer dritten Variante in einer perspektivischen Darstellungsweise.

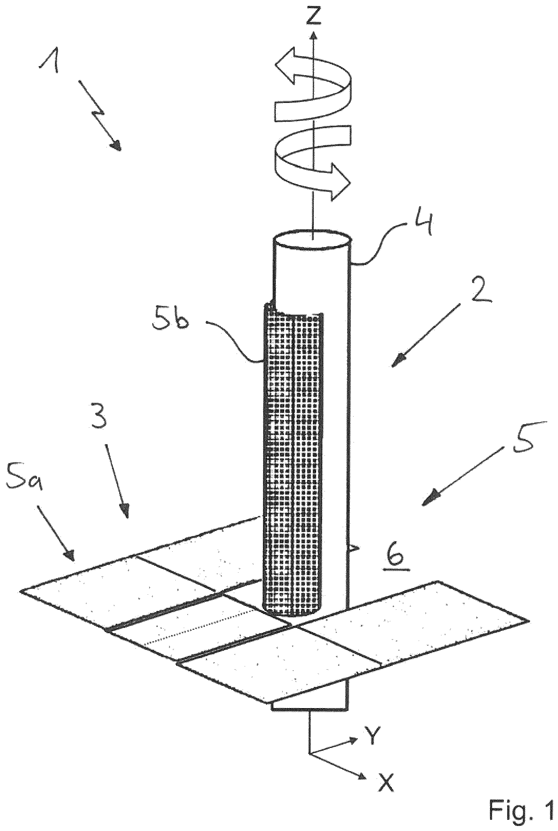

Fig. 1 ist die schematische Darstellung eines erfindungsgemäßen Stromerzeugungssystems 1 zu entnehmen, welches eine zur Gewinnung von Windstrom ausgebildete, hier ohne Rotor dargestellte Windkraftanlage 2 und eine erfindungsgemäße Photovoltaikanlage 3 besitzt. Aus Gründen der besseren Übersichtlichkeit ist die hierfür typischerweise einen nicht näher ersichtlichen Rotor aufweisende Windenergieanlage 2 auf einen Abschnitt ihres Turms 4 reduziert dargestellt. Die Photovoltaikanlage 3 umfasst eine zur Gewinnung von Solarstrom ausgebildete Solarmodulanordnung 5, welche vorliegend einen ersten Solarmodulanordnungsteil 5a und einen zweiten Solarmodulanordnungsteil 5b aufweist. Die Breite des ersten Solarmodulanordnungsteils 5a erstreckt sich in der hier ersichtlichen Stellung parallel zu einer Längsrichtung X, während deren Tiefe parallel zu einer hierzu rechtwinkligen Querrichtung Y verläuft. Das erste Solarmodulanordnungsteil 5a der Solarmodulanordnung 5 ist so ausgestaltet, dass es den Turm 4 berührungslos umgreift oder umgibt. Erkennbar ist der erste Solarmodulanordnungsteil 5a hierzu im Wesentlichen U-förmig oder C-förmig ausgestaltet, wobei es einen Ausschnitt 6 aufweist, innerhalb dem ein Abschnitt des Turms 4 der Windkraftanlage 2 angeordnet ist. Demgegenüber ist der zweite Solarmodulanordnungsteil 5b der Solarmodulanordnung 5 am Turm 4 festgelegt, wobei es an die äußere Kontur des sich koaxial zu einer Hochrichtung Z erstreckenden Turms 4 formangepasst ist. Die Solarmodulanordnung 5 ist dabei zumindest teilweise um den Turm 4 beziehungsweise die Hochrichtung Z herum rotierbar (mit gegenläufig rotierenden weißen Pfeilen angedeutet). Mit anderen Worten bezieht sich die Rotierbarkeit auf wenigstens einen Solarmodulanordnungsteil 5a, 5b oder auf beide gemeinsam.

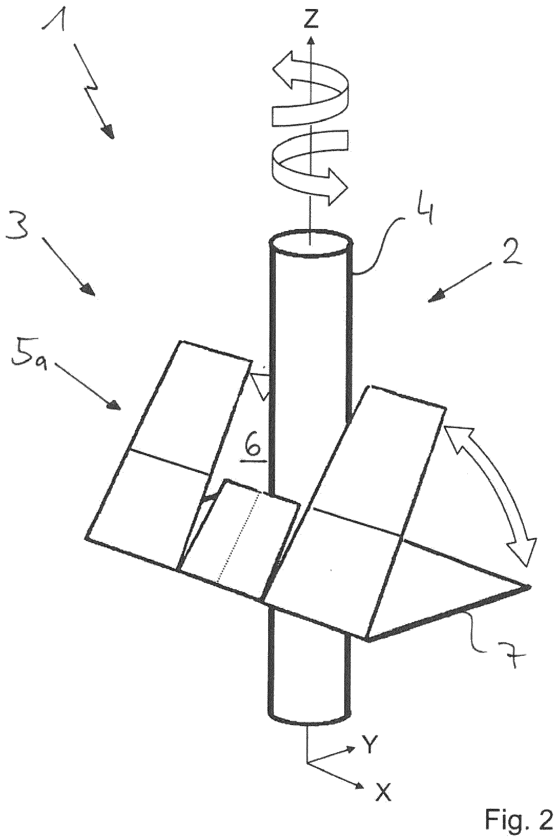

Fig. 2 zeigt das erfindungsgemäße Stromerzeugungssystem 1 aus Fig. 1 in einer Variante. Ersichtlich weist die Solarmodulanordnung 5 hierbei nur den ersten Solarmodulanordnungsteil 5a auf, während der in Fig. 1 an den Turm 4 formangepasste und das an diesem festgelegte zweite Solarmodulanordnungsteil 5b entfallen ist. In beiden Varianten des Stromerzeugungssystems 1 ist zumindest der erste Solarmodulanordnungsteil 5a gegenüber der Hochrichtung Z neigbar ausgestaltet (mit gebogenen weißen Pfeilen angedeutet). Vorliegend weist dieser eine Unterkonstruktion 7 auf, zu welcher der erste Solarmodulanordnungsteil 5a hin zu einer aufgerichteten Position relativ geneigt dargestellt ist. Beispielhaft ist der erste Solarmodulanordnungsteil 5a in nicht näher gezeigter Weise über seine Unterkonstruktion 7 am Turm 4 festgelegt.

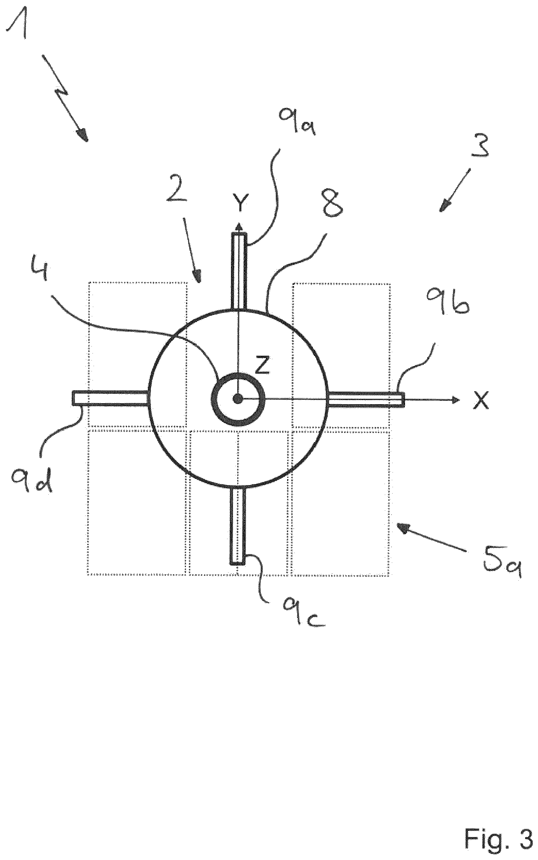

Fig. 3 verdeutlicht die Gründung der Windkraftanlage 2 des erfindungsgemäßen Stromerzeugungssystems 1 in einer schematischen Aufsicht. Der erste Solarmodulanordnungsteil 5a der Solarmodulanordnung 5 ist zur besseren Erkennbarkeit hierbei nur mit gepunkteten Linien angedeutet. Mit Blick entgegen der Hochrichtung Z ist der vorliegend im Querschnitt kreisrunde Turm 4 zu erkennen, welcher sich auf einem hier beispielhaft runden Einzelfundament 8 abstützt und über dieses Einzelfundament 8 gegenüber seitlichen Auslenkungen gehalten ist. Über die äußeren Abmessungen des Einzelfundaments 8 hinweg erstrecken sich hier beispielhaft insgesamt vier radial angeordnete Streifenfundamente 9a-9d, die der Gründung zumindest des ersten Solarmodulanordnungsteil 5a der Solarmodulanordnung 5 dienen. So kann die Solarmodulanordnung 5 zumindest teilweise über eine hier nicht näher ersichtliche Unterkonstruktion 7 auf wenigstens einem der Streifenfundamente 9a-9d abgestützt und/oder an einem zusätzlichen Ringfundament und/oder am Turm 4 festgelegt sein.

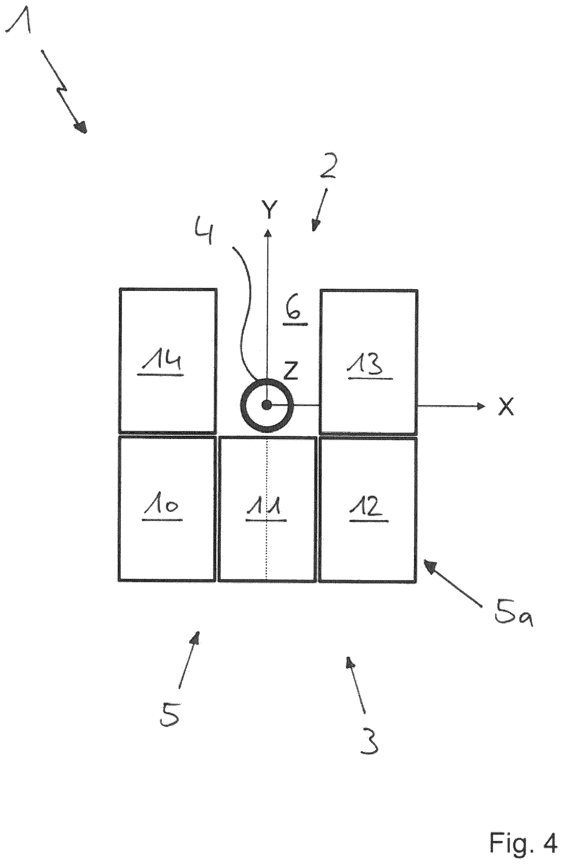

Fig. 4 ist eine weitere Aufsicht auf das erfindungsgemäße Stromerzeugungssystem 1. Gegenüber der Darstellung in Fig. 3 ist dieses im Wesentlichen auf die Darstellung des ersten Solarmodulanordnungsteils 5a der Solarmodulanordnung 5 und den Turm 4 der Windkraftanlage 2 reduziert, während die Gründung zur besseren Übersichtlichkeit nicht mehr dargestellt ist.

Der erste Solarmodulanordnungsteil 5a umfasst vorliegend rein beispielhaft insgesamt fünf einzelne Solarmodule 10-14, von denen drei Solarmodule 10-12 mit ihren Längsseiten nebeneinander angeordnet sind, während die zwei übrigen Solarmodule 13, 14 - unter Ausbildung des Ausschnitts 6 zueinander beabstandet - über ihre Schmalseiten im Bereich der Schmalseiten der äußeren beiden der nebeneinanderliegenden Solarmodule 10-12 angeordnet sind.

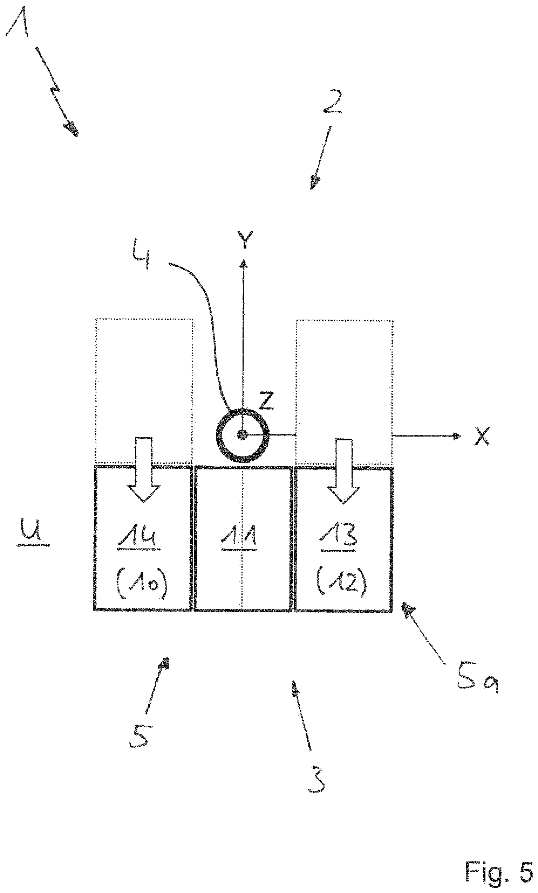

Fig. 5 verdeutlicht die mögliche Verlagerbarkeit der Solarmodule 10-14 relativ zueinander, indem diese mit ihren Deckseiten zumindest bereichsweise übereinander anordenbar sind. Aufgrund eines aktuellen oder zu erwartenden Ereignisses in Bezug auf etwaige Wetterdaten, wie etwa des Aufkommens oder der Zunahme von Wind- oder/und Regenstärke, eines Schneeaufkommens, dem Stand der Sonne oder/und einer möglichen Eislast, wurden die Solarmodule 10-14 gegenüber der Darstellung in Fig. 4 aus ihrer vorherigen Position heraus, insbesondere motorisch, verschoben (durch weiße Pfeile angedeutet). Konkret wechselten die beiden Solarmodule 13, 14 ihre ursprüngliche Position in Richtung der an diese angrenzenden Solarmodule 10, 12, so dass die beiden Solarmodule 13, 14 nur beispielsweise deckungsgleich auf den nunmehr unter diesen liegenden Solarmodulen 10, 12 angeordnet sind (Lage unterhalb durch in Klammern gesetzte Bezugszeichen angedeutet). Durch die Verlagerung der beiden Solarmodule 13, 14 konnte die Fläche des ersten Solarmodulanordnungsteils 5a so verändert werden, dass beispielsweise dessen Windeinzugsfläche verkleinert ist. Auf diese Weise wurde auch der Abschirmeffekt für einen hiervon betroffenen Untergrund U unterhalb des ersten Solarmodulanordnungsteils 5a, wie etwa einem Pflanzenbereich oder/und Erdbereich, reduziert, so dass beispielsweise Regen nun auf einen zuvor noch abgeschirmten Teil des Untergrunds U treffen kann.

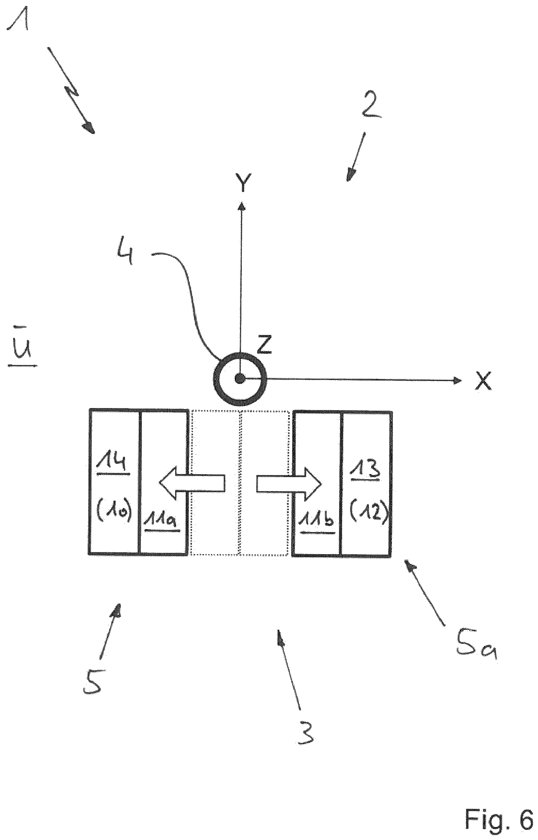

Fig. 6 zeigt eine weitere Veränderung in der Fläche des ersten Solarmodulanordnungsteils 5a gegenüber der Darstellung in Fig. 5. Erkennbar ist das mittlere Solarmodul 11 zweigeteilt ausgebildet, wobei deren erster Solarmodulteil 11a auf die bereits übereinander gelegenen Solarmodule 10, 14 geschoben wurde, während deren zweiter Solarmodulteil 11b nunmehr auf den bereits übereinander angeordneten Solarmodulen 12, 13 gelegen ist (durch weiße Pfeile angedeutet).

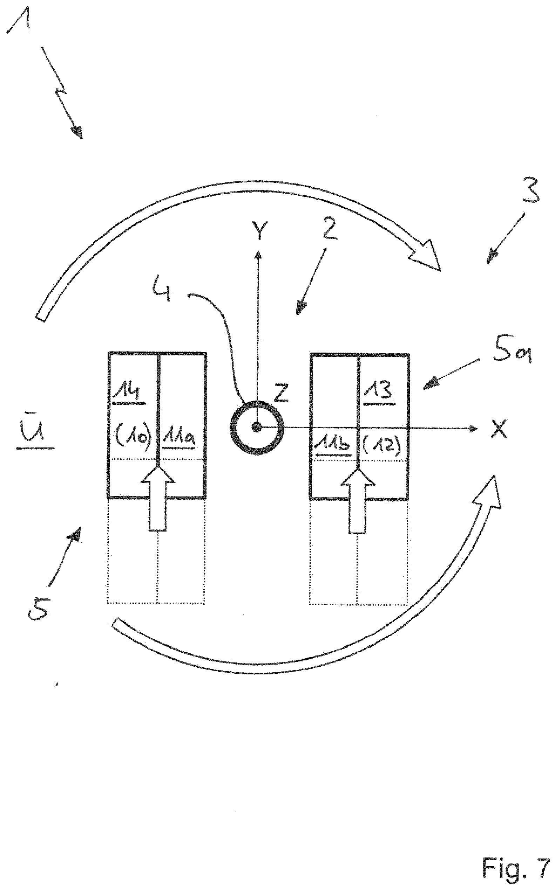

Fig. 7 ist die abschließende Verlagerung der jeweils als Paket aufeinanderliegenden Solarmodule 10, 11a, 14; 11b, 12, 13 hin zum Turm 4 zu entnehmen, wobei die Pakete nunmehr gegenüberliegend angeordnet sind und den Turm 4 zwischen sich einschließen. In dieser Position weist das erste Solarmodulanordnungsteil 5a ein Minimum an Fläche auf, so dass dessen abschirmender Effekt in Bezug auf den Untergrund U deutlich reduziert ist. Bedarfsweise können die Pakete um den Turm 4 herum rotiert werden, um beispielsweise eine gleichmäßige Benetzung des Untergrundes U mit Regen und/oder Tau zu erreichen (Rotationsmöglichkeit mit gebogenen weißen Pfeilen angedeutet).

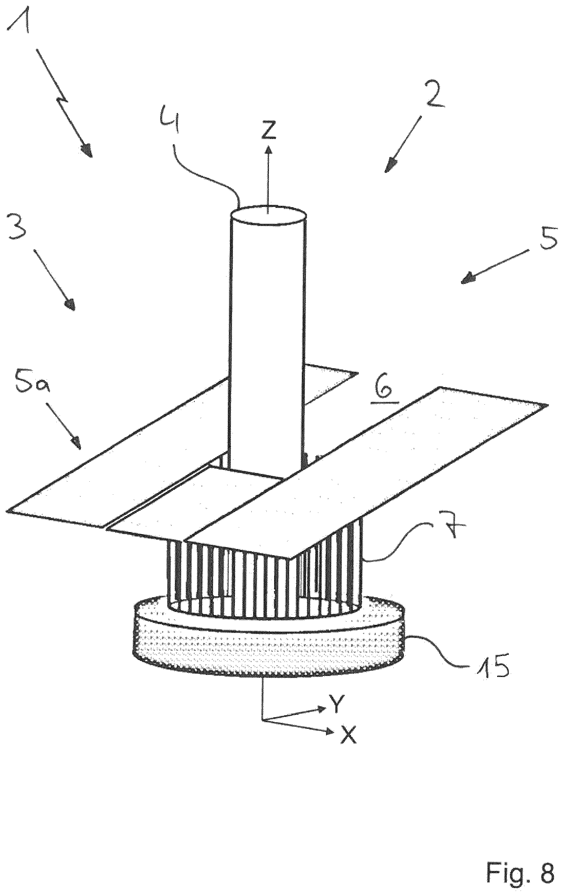

Fig. 8 zeigt eine letzte Variante des erfindungsgemäßen Stromerzeugungssystems 1 in einer wie bereits aus den Fig. 1 und Fig. 2 hervorgehenden perspektivischen Darstellungsweise. Erkennbar weist dieses nunmehr ein zusätzliches Ringfundament 15 auf, wobei die Unterkonstruktion 7 nunmehr so ausgebildet ist, dass die Solarmodulanordnung 5 beziehungsweise deren erster Solarmodulanordnungsteil 5a über die Unterkonstruktion 7 ausschließlich auf dem Ringfundament 15 abgestützt ist. Dabei kann der Turm 4 durch das zumindest erste Solarmodulanordnungsteil 5a in nicht näher gezeigter Weise umfahren werden, indem dieses sich auf dem Ringfundament 15 abstützt, ohne den Turm 4 selbst zu belasten. Aufgrund der Dimensionierung der Unterkonstruktion 7 ist zumindest der erste Solarmodulanordnungsteil 5a in einem Höhenbereich relativ zum Turm 4 gelegen, so dass der Untergrund U unterhalb des ersten Solarmodulanordnungsteils 5a begehbar und dabei vollständig weiter nutzbar ist, beispielsweise für die Viehzucht oder landwirtschaftliche Zwecke. Denkbar ist auch dessen beispielhafte Nutzung als Parkfläche, für Solarstrom-Tankstellen oder einfach nur als Wiese oder Brachland.

In Bezug auf den nicht näher gezeigten Rotor der Windkraftanlage 2 ist denkbar, dass wenigstens ein Solarmodul an diesem angeordnet ist. Alternativ oder ergänzend hierzu kann der Rotor zumindest bereichsweise als ein solches Solarmodul ausgebildet sein.

Die erfindungsgemäße zumindest teilweise Verlagerbarkeit sowie Neigbarkeit und Rotierbarkeit der Solarmodulanordnung 5 erlaubt dessen Ansteuerung in Form eines Nachführsystems, welches stets die optimale Ausrichtung zur Sonne gewährleistet. Auf diese Weise ist es möglich, dem Lauf der Sonne zu folgen, um eine möglichst große Effizienz zu erreichen. Hierbei wird in vorteilhafter Weise darauf geachtet, dass der Turm der Windkraftanlage selbst möglichst keinen Schatten auf die Solarmodulanordnung 5 wirft. Aufgrund der angedachten Größe der Solarmodulanordnung 5 treten entsprechend hohe statische und insbesondere dynamische Kräfte auf, die eine entsprechende Ausgestaltung insbesondere der Unterkonstruktion verlangen. Beim Auftreten etwaiger Belastungsspitzen oder gar schädlicher Einflüsse kann die Solarmodulanordnung 5 in der zuvor beschriebenen Weise in ihrer Größe angepasst werden, um zur Reduzierung der sonst auftretenden Belastungen deren Einzugs- und Belastungsfläche entsprechend anzupassen. In diesem Zusammenhang ist die Etablierung eines Alarm-Systems denkbar, welches beim Auftreten oder bei zu erwartenden Ereignissen die Solarmodulanordnung 5 in eine sichere Position mit angepasster Fläche und Neigung verlagert oder/und dabei insbesondere verfährt.

### Bezugszeichen:

- 1: Stromerzeugungssystem
- 2: Windkraftanlage von 1
- 3: Photovoltaikanlage von 1
- 4: Turm von 2
- 5: Solarmodulanordnung von 3
- 5a: erster Solarmodulanordnungsteil von 5
- 5b: zweiter Solarmodulanordnungsteil von 5
- 6: Ausschnitt von 5
- 7: Unterkonstruktion von 3
- 8: Einzelfundament von 2
- 9a: Streifenfundament von 1
- 9b: Streifenfundament von 1
- 9c: Streifenfundament von 1
- 9d: Streifenfundament von 1
- 10: Solarmodul von 5
- 11: Solarmodul von 5
- 11a: erster Solarmodulteil von 11
- 11b: zweiter Solarmodulteil von 11
- 12: Solarmodul von 5
- 13: Solarmodul von 5
- 14: Solarmodul von 5
- 15: Ringfundament von 1

- X: Längsrichtung
- Y: Querrichtung
- Z: Hochrichtung

## Patentansprüche

1. Photovoltaikanlage (3) für eine zur Gewinnung von Windstrom ausgebildete und einen Turm (4) aufweisende Windkraftanlage (2), umfassend eine zur Gewinnung von Solarstrom ausgebildete Solarmodulanordnung (5), **gekennzeichnet durch**
eine Ausgestaltung der Solarmodulanordnung (5) derart, dass der Turm (4) zumindest bereichsweise mit wenigstens einem Teil der Solarmodulanordnung (5) umgreifbar oder/und umfahrbar ist.

2. Photovoltaikanlage (3) nach Anspruch 1,
**dadurch gekennzeichnet,**
**dass** wenigstens ein Teil der Solarmodulanordnung (5) zumindest bereichsweise an die äußere Kontur des Turms (4) formangepasst ist.

3. Photovoltaikanlage (3) nach Anspruch 1 oder 2,
**dadurch gekennzeichnet,**
**dass** wenigstens ein Teil der Solarmodulanordnung (5) einen Ausschnitt (6) aufweist, innerhalb dem der Turm (4) zumindest bereichsweise anordenbar ist.

4. Photovoltaikanlage (3) nach einem der vorhergehenden Ansprüche,
**gekennzeichnet durch**
eine Ausgestaltung der Solarmodulanordnung (5) derart, dass diese zumindest teilweise am Turm (4) festlegbar oder/und neben dem Turm (4) abstützbar ist.

5. Photovoltaikanlage (3) nach einem der vorhergehenden Ansprüche,
**gekennzeichnet durch**
eine Ausgestaltung wenigstens eines Teils der Solarmodulanordnung (5) derart, dass diese gegenüber einer Hochrichtung (Z), insbesondere relativ zu einer Unterkonstruktion (7), neigbar ist.

6. Photovoltaikanlage (3) nach einem der vorhergehenden Ansprüche,
**dadurch gekennzeichnet,**
**dass** die Solarmodulanordnung (5) einzelne Solarmodule (10-14) besitzt, von denen wenigstens einige relativ zueinander, insbesondere mit ihren Deckseiten zumindest bereichsweise übereinander, verlagerbar sind.

7. Photovoltaikanlage (3) nach einem der vorhergehenden Ansprüche,
**gekennzeichnet durch**
eine Unterkonstruktion (7), **durch** welche zumindest ein Teil der Solarmodulanordnung (5) in einem, insbesondere zwischen einem Rotor der Windkraftanlage (2) und einem Untergrund (U) gelegenen, Höhenbereich relativ zum Turm (4) anordenbar ist.

8. Photovoltaikanlage (3) nach einem der vorhergehenden Ansprüche,
**dadurch gekennzeichnet,**
**dass** die Solarmodulanordnung (5) einzelne Solarmodule (10-14) besitzt, wobei wenigstens einige der Solarmodule (10-14) U-förmig zueinander angeordnet oder anordenbar sind sowie einzeln und/oder als eine Einheit verlagerbar, insbesondere schwenk- oder/und drehbar, sind.

9. Stromerzeugungssystem (1), umfassend eine Windkraftanlage (2) und eine Photovoltaikanlage (3) nach einem der vorhergehenden Ansprüche.

10. Stromerzeugungssystem (1) nach Anspruch 9,
**dadurch gekennzeichnet,**
**dass** wenigstens einige Solarmodule an einem Rotor der Windkraftanlage (2) angeordnet sind oder der Rotor zumindest teilweise als mindestens ein Solarmodul ausgebildet ist.

11. Verfahren zum Betrieb einer Photovoltaikanlage (3) nach einem der Ansprüche 1 bis 8 oder ein Stromerzeugungssystem (1) nach Anspruch 9 oder 10, wobei auf Basis von, insbesondere vor Ort über Sensoren erfassbaren, Wetterdaten zumindest ein Teil einer Solarmodulanordnung (5) der Photovoltaikanlage (3) in Bezug auf ihre Ausrichtung oder/und die Anordnung zumindest einiger ihrer Solarmodule (10-14) relativ zueinander angesteuert wird.

12. Verfahren nach Anspruch 11,
**dadurch gekennzeichnet,**
**dass** auf Basis wenigstens eines der nachfolgend genannten Gründe die Solarmodulanordnung (5) der Photovoltaikanlage (3) zumindest teilweise in ihrer Neigung verändert wird oder/und wenigstens einige Solarmodule (10-14) der Solarmodulanordnung (5) relativ zueinander verlagert werden:
a) wegen einer aktuellen oder zu erwartenden Windstärke, um die Windeinzugsfläche zu reduzieren,
b) wegen eines aktuellen oder zu erwartenden Schneeaufkommens, um die Anhaftung des Schnees, und damit insbesondere die Schneelast, zu reduzieren,
c) wegen einer aktuellen oder zu erwartenden Regenstärke, um den Abschirmeffekt gegenüber Regen für einen hiervon betroffenen Pflanzenbereich oder/und Erdbereich unterhalb der Solarmodulanordnung (5) zu reduzieren,
d) wegen eines aktuellen oder zu erwartenden Standes der, insbesondere tiefstehenden oder abwesenden, Sonne, um den Abschirmeffekt gegenüber Tau für einen hiervon betroffenen Pflanzenbereich oder/und Erdbereich unterhalb der Solarmodulanordnung (5) zu reduzieren,
e) wegen einer aktuellen oder zu erwartenden Eislast, um die Eisauflagefläche zu reduzieren oder/und um wenigstens eines der Solarmodule (10-14) von der Windkraftanlage (2) abzuwenden, insbesondere als Schutz vor herabfallenden Eisstücken.

13. Verfahren nach Anspruch 12,
**dadurch gekennzeichnet,**
**dass** auf Basis des Grundes gemäß Punkt c) zumindest einige Teile der Solarmodulanordnung (5) oder/und wenigstens einige Solarmodule (10-14) als Einheit um einen Turm (4) der Windkraftanlage (2) herum rotiert werden.

14. Verfahren nach Anspruch 12,
**dadurch gekennzeichnet,**
**dass** auf Basis des Grundes gemäß Punkt e) ein Rotor der Windkraftanlage (2) zumindest bereichsweise beheizt wird.

15. Verfahren nach Anspruch 12 oder 14,
**dadurch gekennzeichnet,**
**dass** auf Basis des Grundes gemäß Punkt e)ein Rotor der Windkraftanlage (2), vorzugsweise bis zu dessen Stillstand, abgebremst wird, um zum Ablösen von Eisstücken führende Fliehkräfte zu reduzieren oder zu verhindern.

16. Verfahren nach einem der Ansprüche 11 bis 15,
**dadurch gekennzeichnet,**
**dass** auf Basis eines aktuellen oder zu erwartenden Sonnenstands die Solarmodulanordnung (5) zumindest teilweise zur Erzielung einer optimalen Gewinnung von Solarstrom ausgerichtet wird, insbesondere unter Vermeidung eines Schattenwurfs durch die Windkraftanlage (2) auf die Solarmodulanordnung (5).

17. Verfahren nach einem der Ansprüche 11 bis 16,
**dadurch gekennzeichnet,**
**dass** die Solarmodulanordnung (5) bei Bedarf, insbesondere zu Wartungs- oder Reparaturzwecken oder/und auf Basis einer aktuellen oder zu erwartenden Windstärke, mit wenigstens einer der nachfolgenden Maßnahmen manipuliert wird:
- Lageveränderung wenigstens eines Teils oder/und mindestens eines Solarmoduls (10-14) der Solarmodulanlage (5) in Bezug auf eine Höhe relativ zum Untergrund (U),
- Lageveränderung wenigstens eines Teils oder/und einzelner Solarmodule (10-14) der Solarmodulanlage (5) relativ zueinander,
- Rotation wenigstens eines Teils oder/und einzelner Solarmodule (10-14) der Solarmodulanlage (5), insbesondere als Einheit, in Bezug auf einen Turm (4) der Windkraftanlage (2).

## Geänderte Patentansprüche

### Geänderte Patentansprüche gemäss Regel 137(2) EPÜ.

1. Photovoltaikanlage (3) für eine zur Gewinnung von Windstrom ausgebildete und einen Turm (4) aufweisende Windkraftanlage (2), umfassend eine zur Gewinnung von Solarstrom ausgebildete Solarmodulanordnung (5), welche derart ausgestaltet ist, dass der Turm (4) zumindest bereichsweise mit wenigstens einem Teil der Solarmodulanordnung (5) umgreifbar oder/und umfahrbar ist,
**dadurch gekennzeichnet,**
**dass** die Solarmodulanordnung (5) einzelne Solarmodule (10-14) besitzt, wobei wenigstens einige der Solarmodule (10-14) U-förmig zueinander angeordnet oder anordenbar sind sowie als eine Einheit schwenk- oder/und drehbar sind.

2. Photovoltaikanlage (3) nach Anspruch 1,
**dadurch gekennzeichnet,**
**dass** wenigstens ein Teil der Solarmodulanordnung (5) zumindest bereichsweise an die äußere Kontur des Turms (4) formangepasst ist.

3. Photovoltaikanlage (3) nach Anspruch 1 oder 2,
**dadurch gekennzeichnet,**
**dass** wenigstens ein Teil der Solarmodulanordnung (5) einen Ausschnitt (6) aufweist, innerhalb dem der Turm (4) zumindest bereichsweise anordenbar ist.

4. Photovoltaikanlage (3) nach einem der vorhergehenden Ansprüche,
**gekennzeichnet durch**
eine Ausgestaltung der Solarmodulanordnung (5) derart, dass diese zumindest teilweise am Turm (4) festlegbar oder/und neben dem Turm (4) abstützbar ist.

5. Photovoltaikanlage (3) nach einem der vorhergehenden Ansprüche,
**gekennzeichnet durch**
eine Ausgestaltung wenigstens eines Teils der Solarmodulanordnung (5) derart, dass diese gegenüber einer Hochrichtung (Z), insbesondere relativ zu einer Unterkonstruktion (7), neigbar ist.

6. Photovoltaikanlage (3) nach einem der vorhergehenden Ansprüche,
**dadurch gekennzeichnet,**
**dass** die Solarmodulanordnung (5) einzelne Solarmodule (10-14) besitzt, von denen wenigstens einige relativ zueinander, insbesondere mit ihren Deckseiten zumindest bereichsweise übereinander, verlagerbar sind.

7. Photovoltaikanlage (3) nach einem der vorhergehenden Ansprüche,
**gekennzeichnet durch**
eine Unterkonstruktion (7), **durch** welche zumindest ein Teil der Solarmodulanordnung (5) in einem, insbesondere zwischen einem Rotor der Windkraftanlage (2) und einem Untergrund (U) gelegenen Höhenbereich relativ zum Turm (4) anordenbar ist.

8. Stromerzeugungssystem (1), umfassend eine Windkraftanlage (2) und eine Photovoltaikanlage (3) nach einem der vorhergehenden Ansprüche.

9. Stromerzeugungssystem (1) nach Anspruch 8,
**dadurch gekennzeichnet,**
**dass** wenigstens einige Solarmodule (10-14) der Solarmodulanordnung (5) an einem Rotor der Windkraftanlage (2) angeordnet sind oder der Rotor zumindest teilweise als mindestens ein Solarmodul (10-14) ausgebildet ist.

10. Verfahren zum Betrieb einer Photovoltaikanlage (3) für eine zur Gewinnung von Windstrom ausgebildete Windkraftanlage (2) mit einer zur Gewinnung von Solarstrom ausgebildeten und wenigstens teilweise zum Umgreifen oder/und Umfahren eines Bereiches eines Turms (4) der Windkraftanlage (2) ausgestalteten Solarmodulanordnung (5) oder für ein eine solche Photovoltaikanlage (3) und eine Windkraftanlage (2) umfassendes Stromerzeugungssystem (1), wobei auf Basis von, insbesondere vor Ort über Sensoren erfassbaren, Wetterdaten zumindest ein Teil der Solarmodulanordnung (5) der Photovoltaikanlage (3) in Bezug auf ihre Ausrichtung oder/und die Anordnung zumindest einiger ihrer Solarmodule (10-14) relativ zueinander angesteuert wird,
**dadurch gekennzeichnet,**
**dass** auf Basis wenigstens eines der nachfolgend genannten Gründe die Solarmodulanordnung (5) der Photovoltaikanlage (3) zumindest teilweise in ihrer Neigung verändert wird oder/und wenigstens einige Solarmodule (10-14) der Solarmodulanordnung (5) relativ zueinander verlagert werden:
a) wegen einer aktuellen oder zu erwartenden **Windstärke,** um die Windeinzugsfläche zu reduzieren,
b) wegen eines aktuellen oder zu erwartenden **Schneeaufkommens,** um die Anhaftung des Schnees zu reduzieren,
c) wegen einer aktuellen oder zu erwartenden **Regenstärke,** um den Abschirmeffekt gegenüber Regen für einen hiervon betroffenen Pflanzenbereich oder/und Erdbereich unterhalb der Solarmodulanordnung (5) zu reduzieren,
d) wegen eines aktuellen oder zu erwartenden Standes der, insbesondere tiefstehenden oder abwesenden **Sonne,** um den Abschirmeffekt gegenüber Tau für einen hiervon betroffenen Pflanzenbereich oder/und Erdbereich unterhalb der Solarmodulanordnung (5) zu reduzieren,
e) wegen einer aktuellen oder zu erwartenden **Eislast,** um die Eisauflagefläche zu reduzieren oder/und um wenigstens eines der Solarmodule (10-14) von der Windkraftanlage (2) abzuwenden, insbesondere als Schutz vor herabfallenden Eisstücken.

11. Verfahren nach Anspruch 10,
**dadurch gekennzeichnet,**
**dass** auf Basis des Grundes gemäß Punkt c) zumindest einige Teile der Solarmodulanordnung (5) oder/und wenigstens einige Solarmodule (10-14) als Einheit um einen Turm (4) der Windkraftanlage (2) herum rotiert werden.

12. Verfahren nach Anspruch 10,
**dadurch gekennzeichnet,**
**dass** auf Basis des Grundes gemäß Punkt e) ein Rotor der Windkraftanlage (2) zumindest bereichsweise beheizt wird.

13. Verfahren nach Anspruch 10 oder 12,
**dadurch gekennzeichnet,**
**dass** auf Basis des Grundes gemäß Punkt e) ein Rotor der Windkraftanlage (2), vorzugsweise bis zu dessen Stillstand, abgebremst wird, um zum Ablösen von Eisstücken führende Fliehkräfte zu reduzieren oder zu verhindern.

14. Verfahren nach einem der Ansprüche 10 bis 13,
**dadurch gekennzeichnet,**
**dass** auf Basis eines aktuellen oder zu erwartenden Sonnenstands die Solarmodulanordnung (5) zumindest teilweise zur Erzielung einer optimalen Gewinnung von Solarstrom ausgerichtet wird, insbesondere unter Vermeidung eines Schattenwurfs durch die Windkraftanlage (2) auf die Solarmodulanordnung (5).

15. Verfahren, insbesondere nach einem der Ansprüche 10 bis 14, zum Betrieb einer Photovoltaikanlage (3) für eine zur Gewinnung von Windstrom ausgebildete Windkraftanlage (2) mit einer zur Gewinnung von Solarstrom ausgebildeten und wenigstens teilweise zum Umgreifen oder/und Umfahren eines Bereiches eines Turms (4) der Windkraftanlage (2) ausgestalteten Solarmodulanordnung (5) oder für ein eine solche Photovoltaikanlage (3) und eine Windkraftanlage (2) umfassendes Stromerzeugungssystem (1), wobei auf Basis von, insbesondere vor Ort über Sensoren erfassbaren Wetterdaten zumindest ein Teil einer der Solarmodulanordnung (5) der Photovoltaikanlage (3) in Bezug auf ihre Ausrichtung oder/und die Anordnung zumindest einiger ihrer Solarmodule (10 14) relativ zueinander angesteuert wird,
**dadurch gekennzeichnet,**
**dass** die Solarmodulanordnung (5) bei Bedarf, insbesondere zu Wartungs- oder Reparaturzwecken oder/und auf Basis einer aktuellen oder zu erwartenden Windstärke, mit wenigstens einer der nachfolgenden Maßnahmen manipuliert wird:
- Lageveränderung wenigstens eines Teils oder/und mindestens eines Solarmoduls (10-14) der Solarmodulanlage (5) in Bezug auf eine Höhe relativ zum Untergrund (U),
- Lageveränderung wenigstens eines Teils oder/und einzelner Solarmodule (10-14) der Solarmodulanlage (5) relativ zueinander.
